# EUROPEAN PATENT APPLICATION

(11) **EP 4 575 813 A1**
(43) Date of publication of application: **25.06.2025**
(21) Application number: 24206969.8
(22) Date of filing: 16.10.2024
(51) Int. Cl.: G06F 12/1009, G06F 12/1027, G06F 15/78

(54) **APPARATUS AND METHOD FOR REMOTE VIRTUAL TO PHYSICAL ADDRESS TRANSLATIONS**

(30) Priority: 19.12.2023 US 202318545594
(71) Applicant: INTEL Corporation, Santa Clara, CA 95054 (US)
(72) Inventor: Cline, Scott, Portland OR, 97214 (US); Fryman, Joshua B., Corvallis OR, 97330 (US); Ganev, Ivan, Portland OR, 97229 (US); Pawlowski, Robert, Beaverton OR, 97007 (US)
(74) Representative: Samson & Partner Patentanwälte mbB

(57) **Abstract**

Apparatus and method for remote virtual-to-physical address translations. For example, one embodiment of a processor comprises: an interconnect network; a plurality of cores coupled to the interconnect network, a core of the plurality of cores comprising a core translation lookaside buffer (TLB) and core page table walk (PTW) circuitry; a plurality of memory endpoint subsystems coupled to the interconnect network, each memory endpoint subsystem comprising a memory access circuit and a memory to be accessed via the interconnect network, each memory access circuit comprising a memory endpoint TLB and memory endpoint PTW circuitry; wherein one or more of the memory endpoint subsystems are to perform operations to process an indirect memory access request on behalf of a requesting core, the one or more of the memory endpoint subsystems to: read a virtual pointer address based on the indirect memory access request, translate the virtual pointer address to a physical pointer address, access data based on the physical pointer address, and transmit an indirect memory access response including the data to the requesting core.

## Description

### BACKGROUND

This invention was made with Government support under Contract No. W911NF-22-C-0081 awarded by Army Research Office and IARPA. The Government has certain rights in the invention.

### Field of the Invention

This invention relates generally to the field of computer processors. More particularly, the invention relates to an apparatus and method for remote virtual-to-physical address translations.

### Description of the Related Art

The Advanced Graphic Intelligence Logical Computing Environment (AGILE) program - funded by IARPA - aims to design a system targeting workflows that display hyper-sparse graph characteristics. These applications can make use of specialized operations that address common behaviors in graph algorithms in order to saturate both the network and memory bandwidth - a common performance goal for applications that have low compute intensity.

### BRIEF DESCRIPTION OF THE DRAWINGS

A better understanding of the present invention can be obtained from the following detailed description in conjunction with the following drawings, in which:

A better understanding of the present invention can be obtained from the following detailed description in conjunction with the following drawings, in which:
**FIG. 1** illustrates an example computer system architecture;
**FIG. 2** illustrates a processor comprising a plurality of cores;
**FIG. 3A** illustrates a plurality of stages of a processing pipeline;
**FIG. 3B** illustrates details of one embodiment of a core;
**FIG. 4** illustrates execution circuitry in accordance with one embodiment;
**FIG. 5** illustrates one embodiment of a register architecture;
**FIG. 6** illustrates one example of an instruction format;
**FIG. 7** illustrates addressing techniques in accordance with one embodiment;
**FIG. 8** illustrates one embodiment of an instruction prefix;
**FIGS. 9A-D** illustrate embodiments of how the R, X, and B fields of the prefix are used;
FIGS. 10A-B illustrate examples of a second instruction prefix;
**FIG. 11** illustrates payload bytes of one embodiment of an instruction prefix;
**FIG. 12** illustrates instruction conversion and binary translation implementations;
**FIGS. 13A-B** illustrate examples of Transactional Integrated Global-memory system with Dynamic Routing and End-to-end flow control (TIGRE) implementations;
**FIG. 14** illustrates an example of a local atomic buffer in accordance with embodiments of the invention;
**FIG. 15** illustrates an embodiment of an atomic unit (ATMU) in accordance with embodiments of the invention;
**FIG. 16** illustrates an architecture in accordance with some embodiments including ATMUs;
**FIG. 17** illustrates a reduction address table in accordance with some embodiments;
**FIG. 18** illustrates one embodiment with different types of request handlers;
**FIG. 19** illustrates one embodiment with cache/memory accumulation;
**FIG 20** illustrates a method in accordance with embodiments of the invention; and
**FIG. 21** illustrates techniques for both translating a virtual addresses generated by an application into a physical addresses and caching such translations into TLBs.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

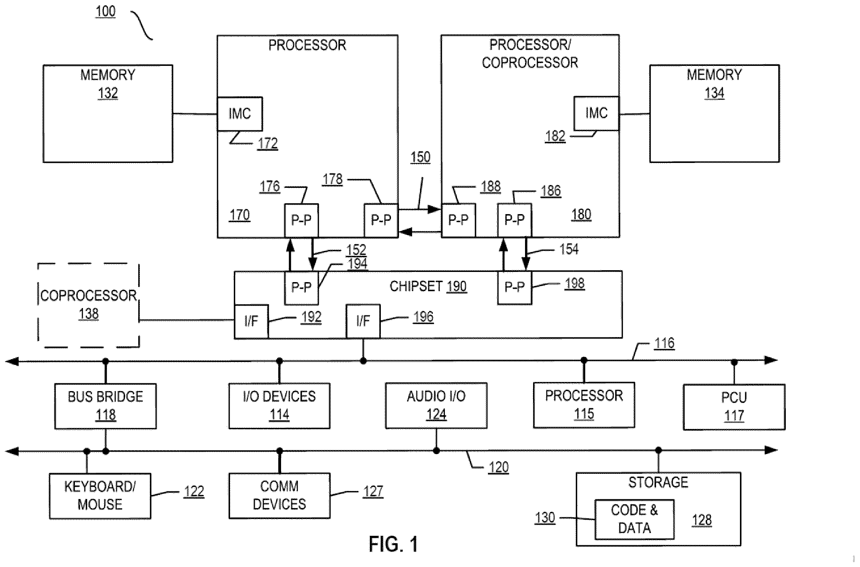

FIG. 1 illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

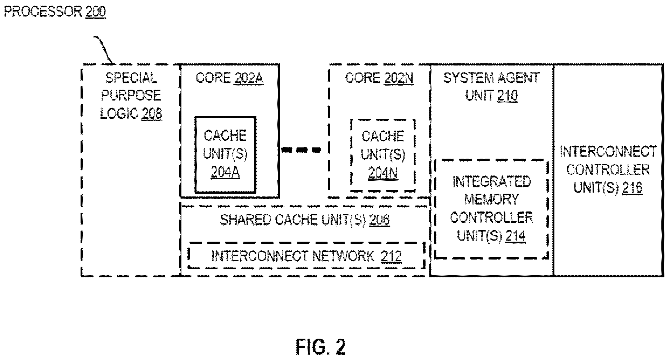

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

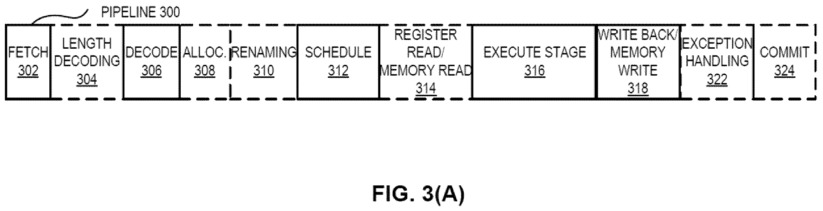

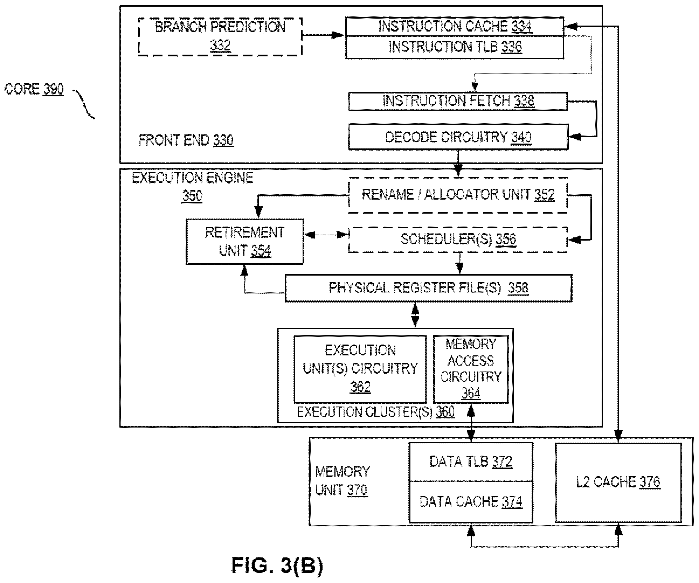

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in FIGS. 3(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 3(A), a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

FIG. 3(B) shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

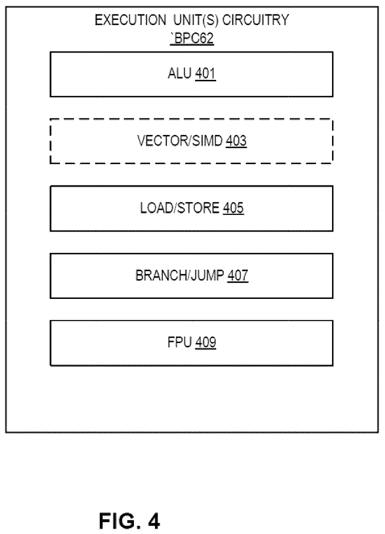

FIG. 4 illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

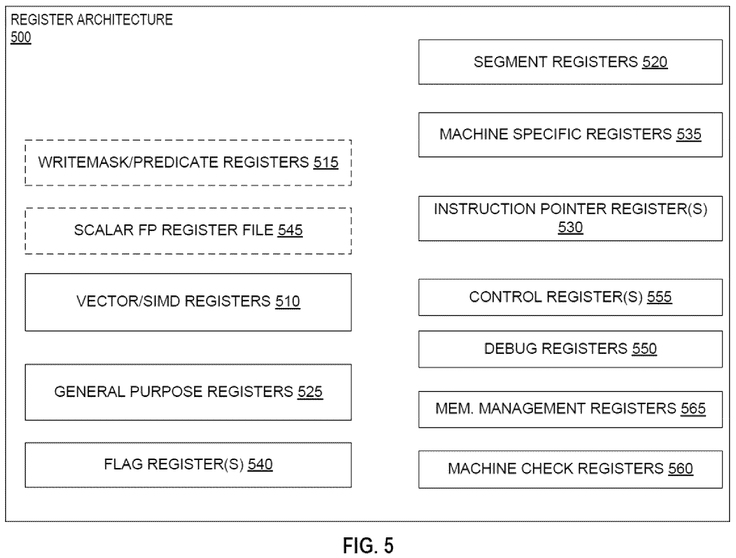

FIG. 5 is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

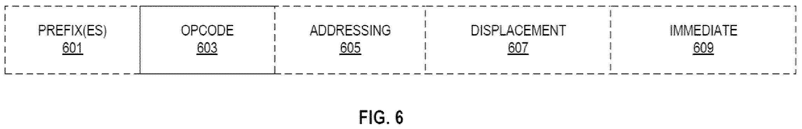

FIG. 6 illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

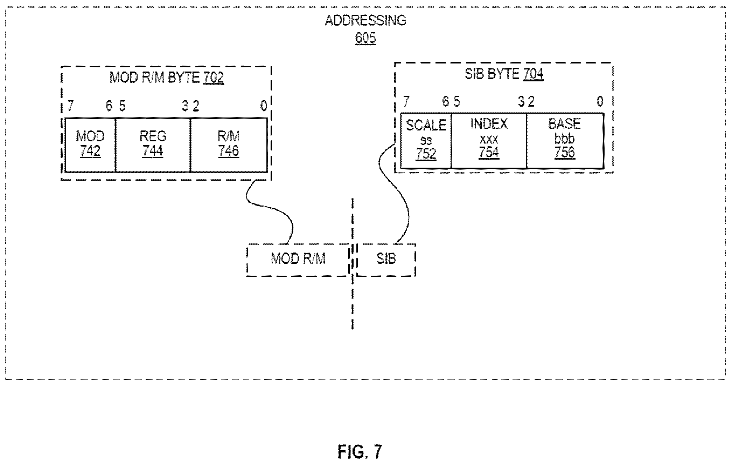

The addressing field 605 is used to address one or more operands of the instruction, such as a location in memory or one or more registers. FIG. 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

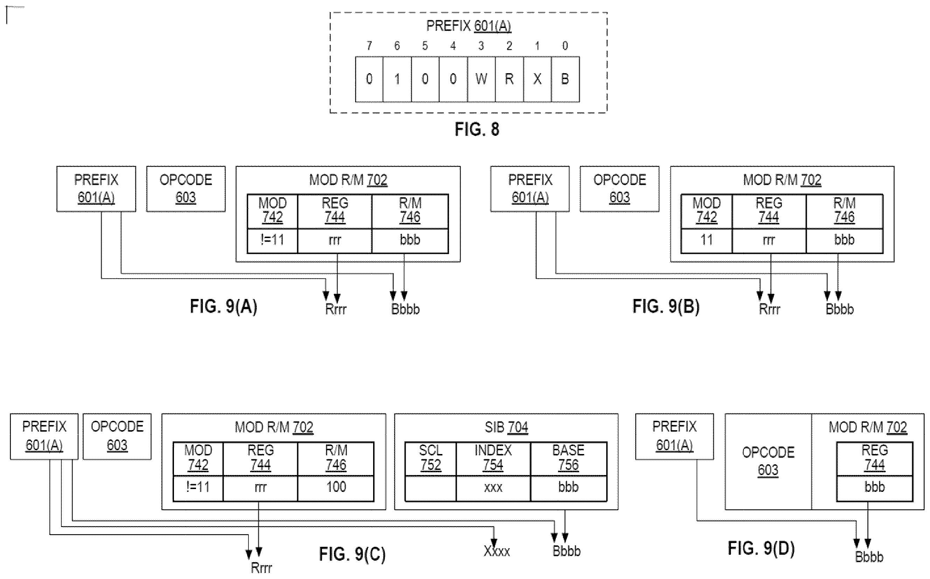

FIG. 8 illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

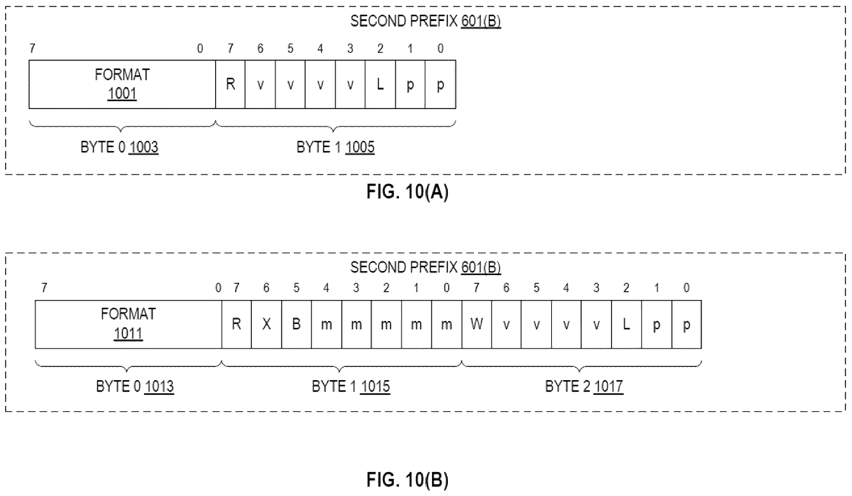

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

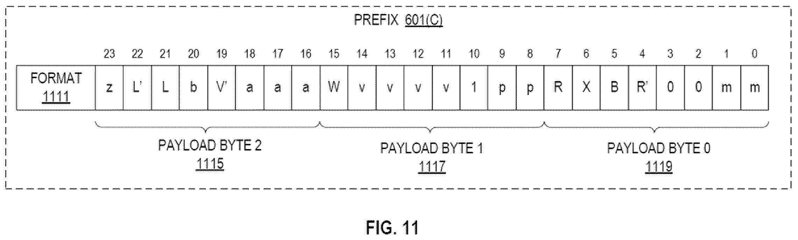

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 5) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | [2:0] | REG. TYPE | COMMON USAGES |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

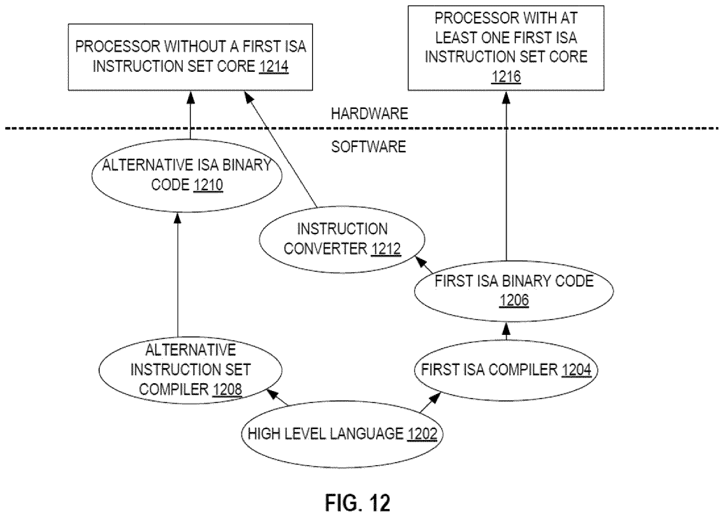

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### EMBODIMENTS OF A TRANSACTIONAL INTEGRATED GLOBAL MEMORY SYSTEM WITH DYNAMIC ROUTING AND END-TO-END FLOW CONTROL

Embodiments of the invention include an ISA and architectural support for direct memory operations that graph data structures. Some implementations are configured outside of the core cache hierarchy to provide greater efficiency through improved memory and network bandwidth utilization. The use of near-memory compute operations reduces total latency by eliminating extra network traversals and taking the shortest total path to all physical memory locations involved in an operation.

Some implementations include a Transactional Integrated Global-memory system with Dynamic Routing and End-to-end flow control (TIGRE) as described herein is a 64-bit Distributed Global Address Space (DGAS) system solution for mixed-mode (sparse and dense) analytics at scale. TIGRE implements complex DMA operations specifically designed to address common primitives seen in graph procedures.

Operations on the TIGRE system may involve various subsystems including pipeline-local DMA engines and near-memory compute at system endpoints. Additionally, an atomic lock buffer positioned adjacent to the memory is implemented to facilitate remote atomic lock/unlock operations involved in the DMA bit manipulation operations.

In one example, each TIGRE pipeline offloads DMA operations (e.g., exposed in the ISA) to a local memory engine (MENG), wherein eight of the TIGRE pipelines are co-located with a shared cache and local SRAM scratchpad to create a TIGRE "slice". A TIGRE tile may include eight slices (e.g., 64 pipelines) and sixteen local DRAM channels. As the system scales out, multiple tiles comprise a TIGRE "socket", and the socket count increases to expand the full system.

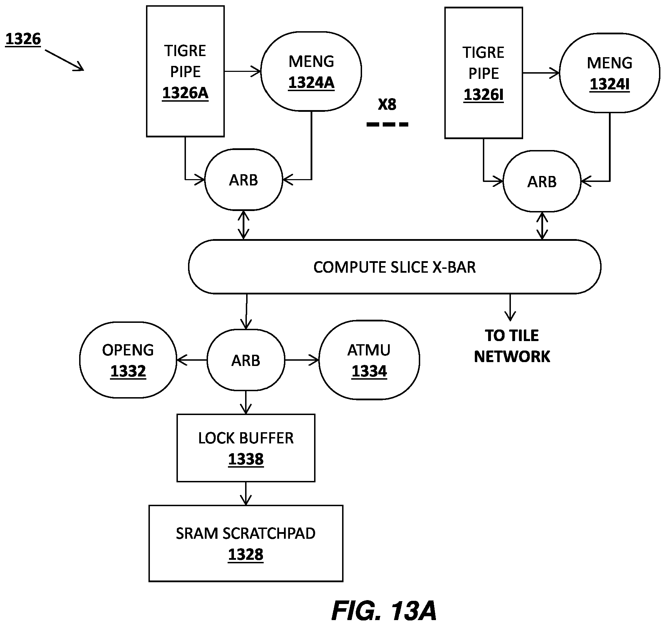

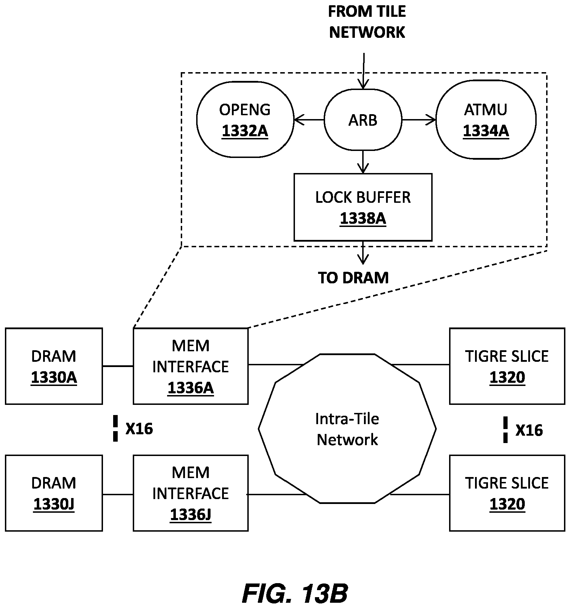

Turning now to FIGS. 13A and 13B, a TIGRE slice 1320 diagram and a TIGRE tile 22 diagram are shown, respectively. FIGS. 13A and 13B show the lowest levels of the hierarchy of the TIGRE system. More particularly, the TIGRE slice 1320 includes a plurality of memory engines 1324 (1324a-1324i) corresponding to a plurality of pipelines 1326 (1326a-1326i), wherein each memory engine 1324 is adjacent to a pipeline in the plurality of pipelines 1326. Each TIGRE pipeline 1326 offloads DMA operations (e.g., exposed in the ISA) to a local memory engine 1324 (MENG). In the illustrated example, eight of the TIGRE pipelines 1326 are co-located with a shared cache (not shown) and a local SRAM scratchpad 1328 to create the TIGRE slice 1320. The illustrated TIGRE tile 1322 includes eight slices 1320 - e.g., sixty-four pipelines 1326 and sixteen local DRAM channels 1330 (1330a-1330j). Specifically, the DMA subsystem hardware is made of up units that are local to the pipeline 1326 as well as in front of all scratchpad 1328 and DRAM channel 1330 interfaces.

Atomic units 1334 (e.g., 1334a-1334j, not shown, e.g., ATMUs) are positioned adjacent to scratchpad 1328 and memory interfaces 1336, and handle the compute and read-lock/write-unlock functionality remote atomic operations. Requests can be sent to the ATMUs 1334 directly by the pipelines 1326 or by the memory engines 1324. The ATMUs 1334 include an integer and floating-point computation unit, as well as a local load-store buffer to support parallel execution of instructions while also maintaining high throughput atomic read-write requests to the DRAM channels 1330.

The memory engines 1324 (MENGs) receive DMA bitmap requests from the local pipelines 1326 and initiate the operation. For example, a first MENG 1324a is responsible for requesting one or more DMA bitmap manipulation operations associated with a first pipeline 1326a. Thus, the first MENG 1324a sends out remote load-stores, direct or indirect, with or without an atomic operation. The first MENG 1324a also tracks the remote load stores sent and waits for all the responses to return before sending a final response back to the first pipeline 1326a.

Operation engines 1332 (1332a-1332j, not shown, e.g., OPENGs) are positioned adjacent to memory interfaces 1336 (1336a-1336j) and receive the load-store requests from the MENGs 1324. The OPENGs 1332 are responsible for performing the actual memory load-store, converting stored pointer values to physical addresses, and sending a follow-on load/store or atomic request if appropriate. Details pertaining to the role of the OPENGs 1332 in the DMA bitmap manipulation operations are provided below.

Lock buffers 1338 are positioned in front of the memory port and maintain line-lock statuses for memory addresses. Each lock buffer 1338 is a multi-entry buffer that allows for multiple locked addresses in parallel per memory interface 1336, supports 64byte (B) or 8B requests, handles partial line updates and write-combining for partial stores, and supports "read-lock" and "write-unlock" requests within atomic operations ("atomics"). The lock buffers 1338 double as a small cache to allow fast access to memory data for bitmap manipulation operations.

### Memory System Remote Bitmap Manipulation Operations

In the memory system described herein, bitmap manipulation operations may be performed using the DMA bitmap instructions listed in Table 4. DMA bitmap instructions are issued from the pipeline to its corresponding local MENG 1324, which then utilizes the OPENG 1332 and ATMU 1334 near the source and destination memory locations. In addition to direct bitmap manipulation, these instructions enable batched bitmap manipulation (e.g., bitmap operations performed on a series of bitmaps pointed to by an initial list).

**Table 4**

| Instruction | Assembly Code for Arguments |
|---|---|
| Dma.bgather (DMA bitmap gather) | R1, r2, r3, r4, r5, DMA_type, SIZE |
| | R1 = Dest bitmap Address |
| | R2 = Index_array |
| | R3 = Count |
| | R4 = Src_bitmap Address |
| | R5 = Result Address |
| | DMA_type = opcode, optype information |
| Dma.bscatter (DMA bitmap Scatter) | R1, r2, r3, r4, r5, DMA_type, SIZE |
| | R1 = Dest bitmap Address |
| | R2 = Index_array |
| | R3 = Count |
| | R4 = Src_bitmap Address |
| | R5 = Result Address |

| | DMA_type = opcode, optype information |
|---|---|
| Dma.bcount (DMA bitmap population count) | **R1, r2, r3, DMA_type, SIZE** |
| | R1 = dest address |
| | R2 = src address |
| | R3 = count |
| | DMA_type = opcode, optype information |
| Dma.bff (DMA bitmap find first bit set) | **R1, r2, r3, DMA_type, SIZE** |
| | R1 = register for storing the first index value |
| | R2 = src address |
| | R3 = count |
| | DMA_type = opcode, optype information |
| Dma.bextract (DMA bitmap extract) | **R1, r2, r3, r4, DMA_type, SIZE** |
| | R1 = index_Array |
| | R2 = Result_Address |
| | R3 = src address |
| | R4 = count |
| | DMA_type = opcode, optype information |

Table 4 demonstrates that DMA operations receive the DMA_Type field as part of an ISA instruction. The DMA_type field contains information on mode of addressing, data type representation and destination atomic operation (if specified). Table 5 describes the functionality of different bit fields in the DMA Type modifier.

**Table 5**

| DMA_Type Bits | Function | |
|---|---|---|
| [0] | 0 = Base offset Mode, 1 = Address Mode; | DMA.convert : [1:0] = Destination Data Type; 00 = int, 01 = |
| | DMA.reduce : 1 = Direct Array reduce; | |
| | Dma.copystride : 0 = passthrough, 1 = pack/unpack; | unsigned, 10 = float, 11 = raw bits |
| [1] | Dma.copystride(pack/unpack) : 0 = pack,1 = unpack | |
| | dma.gather : 1 = atomic_increment_src | |
| [2] | offset pointer size | DMA.convert : [1:0] = Destination Size; 00 = 1 Byte, 01 = 2 Byte, 10 = 3 Byte, 11 = 4 Byte |
| [3] | offset pointer type | |
| [4] | Complement src | |
| [5] | Complement destination | |
| [7:6] | operand type : 00 = int, 01 = unsigned, 10 = float, 11 = raw bits | |
| [10:8] | atomic_opcode | |

Table 6 further explains the atomic operations used for DMA instructions. The bit fields in the DMA_Type argument accommodate operations in a relatively low number of bits and provide flexibility for future added functionality.

**Table 6**

| DMA_type[7:6] (data_type) | DMA_type[10:8] (atomic_opcode) |
|---|---|
| 00(int) | 000 = overwrite |
| | 001 = compare overwrite |
| | 010 = Add |
| | 011 = Mul |
| | 100 = Max |
| | 101 = Min |
| | 110 = Reserved |
| | 111 = Reserved |
| 01(Unsigned) | 000 = overwrite |
| | 001 = compare overwrite |
| | 010 = Add |
| | 011 = Mul |
| | 100 = Max |
| | 101 = Min |
| | 110 = Reserved |
| | 111 = Reserved |
| 10(float) | 000 = overwrite |
| | 001 = compare overwrite |
| | 010 = Add |
| | 011 = Mul |
| | 100 = Max |
| | 101 = Min |
| | 110 = Reserved |
| | 111 = Reserved |
| 11(Raw bits) | 000 = NONE(Overwrite) |
| | 001 = bit_atomic_AND(for bitmap instructions), BITWISE AND for other instructions |
| | 010 = bit_atomic_OR(for bitmap instructions), BITWISE OR for other instructions |
| | 011 = bit_atomic_XOR(for bitmap instructions), BITWISE XOR for other instructions |
| | 011 = bit_atomic_TEST_AND_SET(for bitmap instructions), Reserved for other instructions |
| | 101 = Reserved |
| | 110 = Reserved |
| | 111 = Reserved |

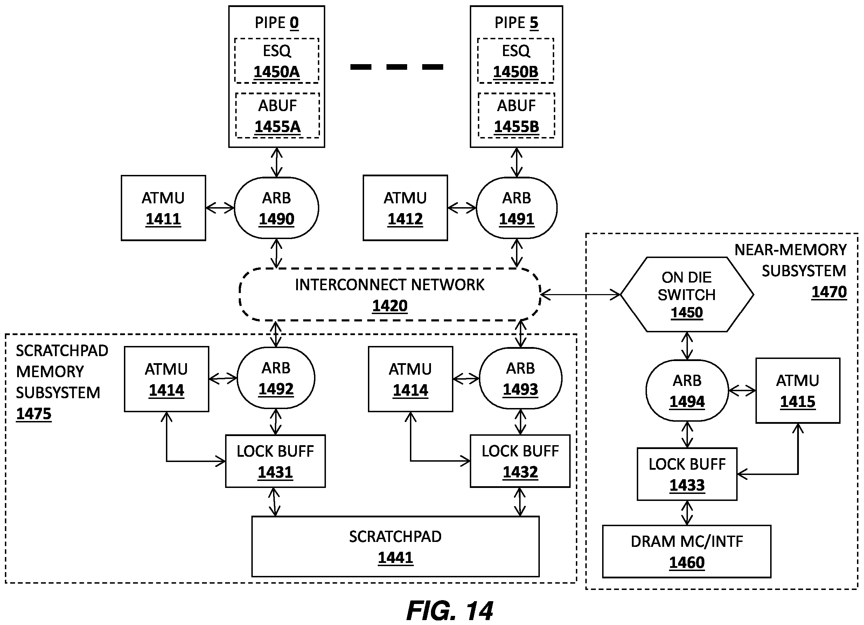

**FIG. 14** illustrates an example of a unified memory architecture core with six pipelines 0-5 (only two of which are shown for simplicity). Some implementations may include a number of these cores per die (e.g., four, eight, sixteen, etc). The illustrated architecture scales to O(1000) nodes with all memory endpoints visible via a 64-bit distributed global address space (DGAS). Storage includes a 4MB (2-port) scratchpad memory 1441 (e.g., a static random access memory (SRAM)) within a scratchpad memory subsystem 1475 and an adjacent narrow-channel (8B) DRAM interface/memory controller 1460 (e.g., operable at 4GB/core) within a near-memory subsystem 1470, while model-specific registers (MSRs) and physical register files (PRFs) may also be targeted by any pipeline. Although not illustrated, embodiments of the invention may be used within various other levels of memory such as storage class or "far" memory (not shown).

In some embodiments, atomic unit (ATMU) engines 1411-1415, positioned in multiple locations handle the execution of the atomic operation next to the memory interface. Each ATMU engine 1411-1415 includes one or more integer units and one or more floating-point units and may support execution of multiple instructions in parallel to maintain high throughput.

In some implementations, lock buffers 1431-1433 maintain line-lock status for memory addresses behind the scratchpad 1441 and DRAM port 1460. The lock buffers 1431-1433 are multi-entry buffers that allow for multiple locked addresses in parallel per memory interface, handle partial line updates and write-combining for partial stores, and support 'read-lock' and 'write-unlock' requests within atomics. Requests of different sizes are supported, such as 64B or 8B requests as described in detail below. Arbitration units 1490-1493 control access to the high-speed interconnect network 1420 which interconnects the core pipelines 0-5 to the scratchpad memory 1441, ATMUs 1414-1414, lock buffers 1431-1432, and near memory subsystem 1470.

An on-die switch 1450 couples the near memory subsystem 1470 to the interconnect network 1420 to provide access to the DRAM memory controller/interface 1460 and the associated lock buffer 1433 and ATMU 1415 via arbitration unit 1494.

In some implementations, each pipeline 0, 5 includes an engine sequence queue (ESQ) 1450A, 1450B and an atomic buffer (ABUF) 1455A, 1455B, respectively. The ESQs 1450A-B manage the status and ordering of offloaded operations including DMA, atomics, thread context operations, and collectives. In these embodiments, each ESQ 1450A-B supports "chaining" of offloaded operations to guarantee sequential operation. The ESQs 1450A-B provide visibility of offloaded operations to each corresponding pipeline 0, 5 by implementing wait-class instructions and/or triggering interrupts upon completion of offloaded operations. The ESQs 1450A-B also allow their respective pipelines 0, 5 to track status for the purposes of fencing on offloaded operations.

The atomic buffers (ABUFs) 1455A-B are also pipeline-local units which track outstanding remote atomic requests sent from that pipeline. Each ABUF 1455A-B is responsible for committing the return value (if necessary) back to the local register file of its respective pipeline 0, 5, indicating completion to the corresponding ESQ 1450A-B, and reporting any exceptions that occur during remote atomic operations.

The remainder of this disclosure will discuss each aspect of the embodiments of the invention, including remote atomic operations, the ISA descriptions and pipeline behavior, and then the operation of the ATMUs 1413-1415 and lock buffers 1431-1433 at each respective memory interface.

Table 4 lists a set of remote atomic instructions which may be implemented by embodiments of the invention. These instructions may be provided as part of an ISA extension. Note, however, that the underlying principles of the invention do not require an implementation of these specific instructions.

For operations that include a computation, both integer and floating point types are supported via different instructions (i.e. xaddI and xaddF). These are combined into a single row of Table 4. All operation types also have three flavors of instruction input arguments to support different types of addressing. All flavors are listed, and the difference in address generation is specified in the 'Description' column.

The RVAL argument shown in these instructions is for the programmer to specify if a return value (e.g., to be written to a register file) is needed. If so, the instruction will become blocking when data dependencies occur within the pipeline. If not, the instruction is offloaded and executed in the background, only becoming visible if software implements a fence on atomic operations. Instructions with no RVAL (i.e. xchg) will always have a return value written to the register file. The SIZE argument specifies the target data size as 8, 16, 32, or 64 bits.

**Table 4**

| **Instruction** | **ASM For Arguments** | **Description** |
|---|---|---|
| xadd{I/F} | r1,r2,r3,r4,SIZE,RVAL | mem[r2+r3] += r4; if (RVAL==1), return oldval in r1, else no return val. |
| xadd{I/F} | r1,r2,r3,SIZE,RVAL | mem[r2] += r3; if (RVAL==1), return oldval in r1, else no return val. |
| xadd{I/F} | r1,r2,imm32,SIZE,RVAL | mem[zero_ext(imm32)] += r2; if (RVAL==1), return oldval in r1, else no return val. |
| xincdec{I/F} | r1,r2,r3,SIZE,RVAL,INCDEC | mem[r2+r3] += (INCDEC ? 1 : -1); if (RVAL==1), return oldval in r1, else no return val. |
| xincdec{I/F} | r1,r2,SIZE,RVAL,INCDEC | mem[r2] += (INCDEC ? 1 : -1); if (RVAL==1), return oldval in r1, else no return val. |
| xincdec{I/F} | r1, imm32, SIZE, RVAL, INCDEC | mem[zero_ext(imm32)] += (INCDEC ? 1 : -1); if (RVAL==1), return oldval in r1, else no return val. |
| xbitop1{I/F} | r1,r2,r3,r4,BITOP,SIZE,RVAL | mem[r2+r3] BITOP r4; if (RVAL==1), return oldval in r1, else no return val. |
| xbitop1{I/F} | r1,r2,r3,BITOP,SIZE,RVAL | mem[r2] BITOP r3; if (RVAL==1), return oldval in r1, else no return val. |
| xbitop1{I/F} | r1,r2,imm32,BITOP,SIZE,RVAL | mem[zero_ext(imm32)] BITOP r2; if (RVAL==1), return oldval in r1, else no return val. |
| xmax{I/F} | r1,r2,r3,r4,SIZE,RVAL | max(mem[r2+r3], r4); if (RVAL==1), return oldval in r1, else no return val. |
| xmax{I/F} | r1,r2,r3,SIZE,RVAL | max(mem[r2], r3); if (RVAL==1), return oldval in r1, else no return val. |
| xmax{I/F} | r1,r2,imm32,SIZE,RVAL | max(mem[zero_ext(imm32)], r2); if (RVAL==1), return oldval in r1, else no return val. |
| xmin{I/F} | r1,r2,r3,r4,SIZE,RVAL | min(mem[r2+r3], r4); if (RVAL==1), return oldval in r1, else no return val. |
| xmin{I/F} | r1,r2,r3,SIZE,RVAL | min(mem[r2], r3); if (RVAL==1), return oldval in r1, else no return val. |
| xmin{I/F} | r1,r2,imm32,SIZE,RVAL | min(mem[zero_ext(imm32)], r2); if (RVAL==1), return oldval in r1, else no return val. |
| xchg{I/F} | r1,r2,r3,SIZE | tmp=mem[r2+r3]; mem[r2+r3]=r1; r1=tmp |
| xchg{I/F} | r1,r2,SIZE | tmp=mem[r2]; mem[r2]=r1; r1=tmp |
| xchg{I/F} | r1,imm32,r2,SIZE | tmp=mem[r2+zero_ext(imm32)]; mem[r2+zero_ext(imm32)]=r1; r1=tmp |
| cmpxchg{I/F} | r1,r2,r3,r4,SIZE | tmp=mem[r2+r3]; if( tmp==r4 ) then mem[r2+r3]=r1; r1=tmp |
| cmpxchg{I/F} | r1,r2,r3SIZE | tmp=mem[r2]; if( tmp==r3 ) then mem[r2]=r1; r1=tmp |
| cmpxchg{I/F} | r1,imm32,r2,SIZE | tmp=mem[zero_ext(imm32)]; if( tmp==r2 ) then mem[zero_ext(imm32)]=r1; r1=tmp |
| icmpxchg{I/F} | r1,r2,r3,r4,SIZE | tmp=mem[r2+r3]; if( tmp != r4 ) then mem[r2+r3]=r1; r1=tmp |
| icmpxchg{I/F} | r1,r2,r3SIZE | tmp=mem[r2]; if( tmp != r3 ) then mem[r2]=r1; r1=tmp |
| icmpxchg{I/F} | r1,imm32,r2,SIZE | tmp=mem[zero_ext(imm32)]; if( tmp != r2 ) then mem[zero_ext(imm32)]=r1; r1=tmp |

As mentioned, each Atomic Buffer (ABUF) 1455A-B is the pipeline-local unit responsible for packetizing and transmitting a remote atomic packet to the destination, tracking status of the remote atomic operations, and committing return values back to the local register file.

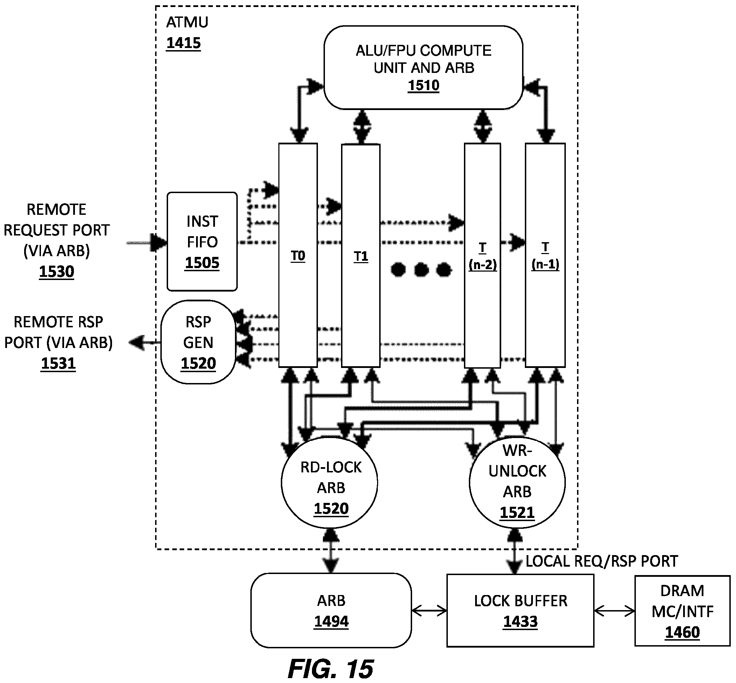

**FIG. 15** illustrates an ATMU 1415 in accordance with some embodiments of the invention. Instructions received from the interconnect network 1420 over the ARB port 1530 (remote requests) are queued into an input FIFO 1505 for execution and responses 1520 are sent over the remote RSP port 1531 (also via an arbitration unit). At the front of the FIFO 1505, the instruction is assigned to one of 'n' parallel execution threads, T0, T1, ... T(n-2), T(n-1), which share access to one or more pipelined ALU/FPU units 1510 and two output ports: the output local request port 1520 through the arbitration unit 1494 to the lock buffer 1433 for 'read-lock' requests and the output port 1521 direct to the lock buffer 1433 for 'write-unlock' requests. In addition,

In operation, once the instruction packet is accepted by the ATMU 1415, the ATMU 1415 decodes the instruction and generates a 'read-lock' request to the local memory controller 1460 via the lock buffer 1433. The lock buffer 1433 returns the requested data and the address remains locked in the lock buffer. The ATMU 1415 then executes the operation specified by the instruction using its internal ALUs/FPUs 1510 and commits the results of the operation back to memory 1460 through the lock buffer 1433 using a 'write-unlock' request. The operation is complete at this point and the lock buffer 1433 unlocks the line(s). The ATMU 1415 transmits an instruction completion indication back to the source ABUF 1455A from the remote response port 1531 (which traverses the interconnect network 1420 to reach the ABUF 1455A). If a return value is requested, that data value is included in the response packet and may be written to the register file 1405. For example, a 64-bit value may be transmitted in the response packet, which the ABUF 1455A stores in the register file 1405 and notifies the ESQ 1450A of the corresponding pipeline.

The ATMU 1415 supports the highest throughput possible for executing remote atomic operations. Because the remote atomic requests can arrive at the ATMU 1415 at a rate of one per cycle, some implementations of the ATMU 1415 support the execution of at least one operation per cycle.

In some embodiments, the number (n) of execution threads, T0-T(n-1), is determined by the latency of a single atomic operation, making each ATMU instance unique in the number of execution threads that exist in each subsystem block. All other features may be consistent across the ATMUs. ATMUs in front of scratchpad ports, such as ATMUs 1413-1414 may have fewer execution threads due to the lower latency of the on-die SRAM accesses.

### APPARATUS AND METHOD FOR REMOTE VIRTUAL TO PHYSICAL ADDRESS TRANSLATIONS

Some embodiments of the invention are targeted at workflows that display hyper-sparse graph characteristics. These embodiments make use of specialized operations that address common behaviors in graph algorithms in order to saturate both the network and memory bandwidth - a common performance goal for applications that have low compute intensity.

Hypersparse graph requirements of these workflows may be addressed by implementing custom indirect load and store instructions (e.g. to facilitate A[B[i]]), as well as Direct Memory Access (DMA) operations with unique graph traversal behaviors and near-memory compute-on-target capabilities. These DMA operations saturate network and memory bandwidth by sustaining a high number of requests to hide latency for remote random pointer chasing behavior across the system. Some embodiments facilitate this with an Indirect Unit (IDU) at each memory endpoint, which can support multiple levels of indirection beyond just one.

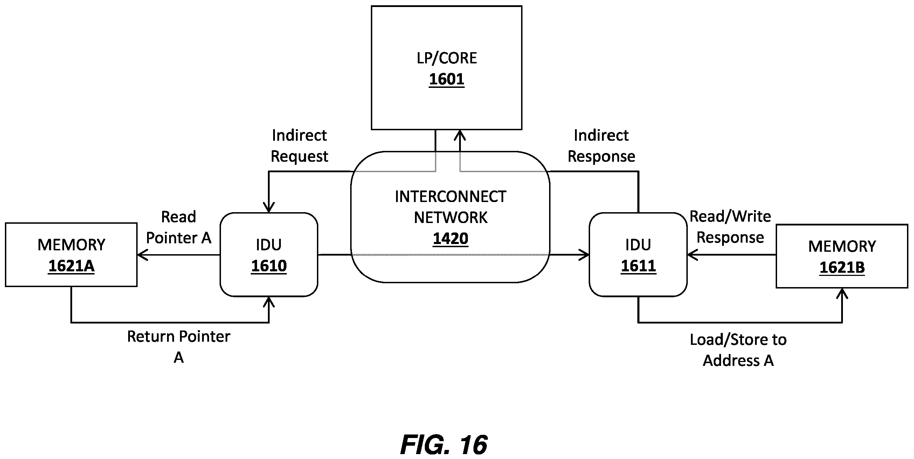

FIG. 16 illustrates an embodiment using a single level of indirection. As illustrated, requests and responses of the various components pass through the interconnect network 1420. In this example, a logical processor (LP) or core 1601 generates an indirect request for data at address A (e.g., in response to one or more load instructions). The indirect request, which must initially read the pointer to A from memory 1621A, is received and processed by IDU 1610, which generates a read from memory 1621A which returns pointer A to IDU 1610. Rather than returning pointer A to the LP/core 1601 which would then need to perform address translation and transmit a request to address A, IDU 1610 communicates the pointer A directly to IDU 1611 which is local to memory 1621B with address A. IDU 1611 then executes the load/store operation to address A in memory 1621B which communicates the data at address A (e.g., a cacheline) to IDU 1611, which returns the data in an indirect response to the LP/core 1601. Thus, the operations of reading and translating pointer A and reading the data at address A is offloaded from the LP/core 1601 to the IDUs 1610-1611.

As used herein, a logical processor (LP) comprises a representation of the processor cores presented to system software (e.g., the operating system). Depending on the configuration, a single LP may comprise a portion of a core (e.g., ½ a core for a hyperthreaded core), a single core, or multiple cores. The terms logical processor and core are sometimes used interchangeably herein to indicate a discrete portion of the instruction processing resources of the processor.

As mentioned, some embodiments are integrated within the TIGRE (transactional integrated global-memory system with dynamic routing and end-to-end flow control) architecture, which implements the RISC-V RV64 ISA, including the SV57 virtual addressing extension, which supports 57-bit virtual address spaces with additional levels of page tables. Being a virtual addressing system, this means the DMA and indirect load/store operations will need the pointers read from memory to be translated to a physical address before being sent to the second destination address. In FIG. 16, for example, the address A pointer is retrieved and translated to a physical address in memory 1621B. This would typically require the pointer to be sent back to the issuing core 1601 to be translated via the core's translation lookaside buffer (TLB). However, doing so can eliminate the efficiency gains provided by the indirect memory access operations.

To overcome this limitation, and better enable the features provided by TIGRE for sparse analytics, embodiments of the invention include a remote TLB and Page Table Walker (PTW) circuitry (e.g., state machine) implemented at each memory endpoint to maintain virtual-to-physical translations and walk the page table on a remote TLB miss. The ability to perform virtual-to-physical translations effectively anywhere in the memory system preserves the efficiency gains by the global memory system's indirect memory operations. In these embodiments, page table information may be transmitted with every memory request so that any thread's indirect memory requests can be translated anywhere in the global memory system.

In accordance with these embodiments, any virtual address from any issuing thread can be translated anywhere (i.e., locally to any physical memory), rather than being sent back to the issuing core for translation. While described within the context of a particular global memory system with a distributed global address space (DGAS) and a highly scalable low-diameter and high-radix network to scale up to 100k sockets in a single system, the underlying principles of the invention may be implemented in any other architectures with virtual addressing, enabling similar capabilities and efficiency gains.

Several classes of operations may be implemented to help meet target requirements, especially those concerning sparse memory accesses. Some of these operations include DMA, which contains functions such as a memory gather/scatter to/from a list of addresses, and indirect load and store instructions, which read a pointer from memory, and then without returning to the issuing thread, submit a load or store request to that pointer (e.g., such as described with respect to FIG. 16).

Indirect memory operations pose challenges to virtual addressing, as each indirect memory operation must be translated from a virtual address to a physical addresses. The remote TLB and PTW mechanisms described herein address this challenge while making use of the indirect memory operations.

Some embodiments are configured to work with a stable toolchain running codes written in common languages such as C++ and Python, including support for a Linux operating system. Consequently, these embodiments implement the RISC-V ISA, including privilege modes and the 57-bit virtual addressing extension.

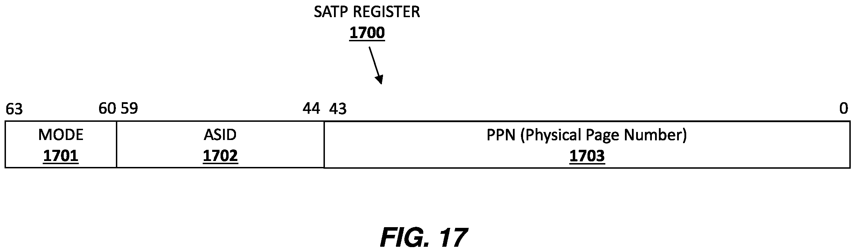

By way of a brief overview, RISC-V page table information is stored within the Supervisor Address Translation and Protection Register (SATP), which is defined for each hardware thread in the system. Referring to FIG. 17, one embodiment of the SATP register 1700 includes a MODE field 1701 which indicates the version of virtual addressing the implementation uses (e.g., set to 0xA for SV-57 in some implementations). The address space identifier (ASID) field 1702 (16 bits in one embodiment) indicates the address space associated with a given memory access request. In some embodiments, each virtual machine or application is assigned a unique ASID. A physical page number (PPN) field 1703 (44 bits in one embodiment) stores the physical address of the root of the page table for the corresponding hardware thread.

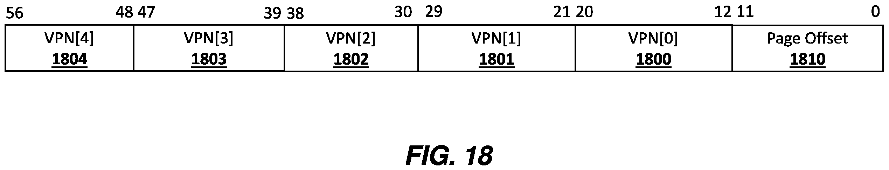

FIG. 18 illustrates an example of an SV57 virtual address comprising five 9-bit VPN values 1800-1804 corresponding to a virtual address of a page and a 12-bit page offset value 1810 corresponding to a particular byte location within the page.

In some implementations, a Page Table Walk (PTW) converts the virtual address to a physical address, using the PPN provided in the SATP register to identify the root table and iterate through potentially all five levels of the virtual address until a valid page table entry (PTE) is identified, which provides the physical address mapped to the virtual address for that ASID.

The translation lookaside buffer (TLB) caches these translations so that the full page table walk does not need to be performed each time the same page is accessed (e.g., in response to subsequent instruction fetch or memory access requests made by the core pipeline). Embodiments of the invention cache address translations in each remote TLB when processing the indirect memory access requests described herein.

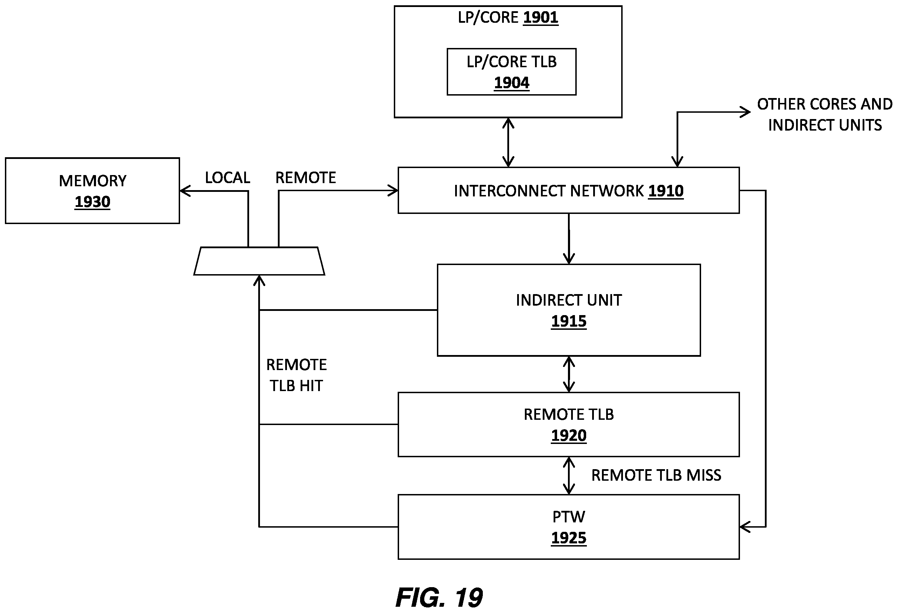

FIG. 19 illustrates the circuitry/logic associated with each memory endpoint in accordance with some embodiments. A remote translation lookaside buffer (TLB) 1920 and page table walk (PTW) circuitry 1925 are placed at each memory endpoint 1930 to facilitate the indirect memory access techniques described herein. An indirect memory access request can include a load or store operation with the form A[B[i]], indicating that a first memory access (A[]) is required to read a pointer address from memory and second memory access (B[]) is required to access the data identified via the pointer.

In some embodiments, when one of these operations is initiated by the core 1901 (or logical processor (LP)) pipeline, the initial source and/or destination addresses are first translated from virtual to physical via the TLB 1904 within the core 1901. The core 1901 then initiates the request to the interconnect network 1910, 1420 along with the ASID and PPN information provided by that thread's SATP register. The privilege level of the hardware thread at the time of instruction execution may also be provided. This leads to a drawback of more information being transmitted with each request, specifically the virtual address (64 bits), the ASID (16 bits), and the PPN (44 bits), and the thread's permission level (2-bits), for approximately 16 bytes of additional information. In some embodiments of the interconnect network 1420, 1920 however, additional network flits are not required to communicate the data. In these embodiments, the indirect load/store instructions result in a single request, whereas the DMA operations can result in some number (N) of requests.

The above information travels with the memory operation through the interconnect network 1420, 1920 to the memory endpoint where the pointer resides. A corresponding indirect unit 1915 receives the request and initiates a read of the local memory 1930 to obtain the pointer. Once the indirect unit receives the response from memory comprising a virtual address, it sends the request to the local TLB 1920 for translation. If it is a TLB hit (i.e., an entry exists mapping the virtual address to a physical address), the TLB 1920 returns the corresponding physical address to the indirect unit 1915, which transmits the next request (which can be a load or store) to the next destination (i.e., either local to this memory 1930 or to another memory accessible via the interconnect network 1910).

On a TLB miss, the TLB 1920 sends the PPN and ASID information to the page table walk circuitry 1925, which walks the page table until a valid PTE is found. The PTE provides the physical address in the local memory 1930 or the remote memory. If no PTE is found, then an exception is generated in response to the indirect request.

These embodiments provide for a variety of levels of indirection/pointer traversal. At the final level of indirection, the indirect unit 1915 will send the response to the initiating core 1901.

Another advantage is that the PTW circuitry 1925 (a simple state machine in one embodiment) resides in close proximity to the memory controller and corresponding memory 1930. When either the core TLB 1904 or the remote TLB 1920 have a page miss, the page information for that thread (the root of the page table provided in the PPN being a physical address), is sent to the memory endpoint 1930 which stores the page table. In this way, iterating through the page table levels occurs locally at the memory endpoint holding the page table. This leads to a reduction in page walk latency, since each iteration of the page walk will happen locally at the memory endpoint, instead of being sent back to the TLB which initiated the walk (e.g., the core TLB 1910).

In some embodiments, an entry in the remote TLB 1920 will contain an SV-57 Page Table Entry, and additional bits to indicate if the translated physical address exists locally to this memory endpoint 1930, or remotely at another endpoint. The remote TLB 1920 and remote PTW 1925 provide an optimization for TLB shootdown support. At the local core 1901, when a virtual to physical translation takes place, the core TLB 1904 determines if the target physical address of the memory request exists locally to the core, and if so, it caches the translation. However, if the physical address points to a different core's memory, the TLB 1904 instead marks this entry as a pointer to another TLB. Any hits to this entry in the local core 1901 will result in the request being forwarded to the remote core, where the translation and memory access will take place, and that remote TLB will store the actual translation.

Each memory 1930 accessible via the interconnect network 1910 is sometimes referred to as a "memory endpoint" and each combination of a memory endpoint 1930, indirect unit 1915, remote TLB 1920, and PTW circuitry 1925 is sometimes referred to herein as a "memory endpoint subsystem." Embodiments of the invention may include a plurality of such memory endpoint subsystems interconnected to a plurality of cores and other processor/SoC components (e.g., IO interfaces) via the interconnect network 1910. Each combination of an indirect unit 1915, a remote TLB 1920 and corresponding PTW circuitry 1925 is sometimes referred to as a "memory access circuit" or a "local memory access circuit."

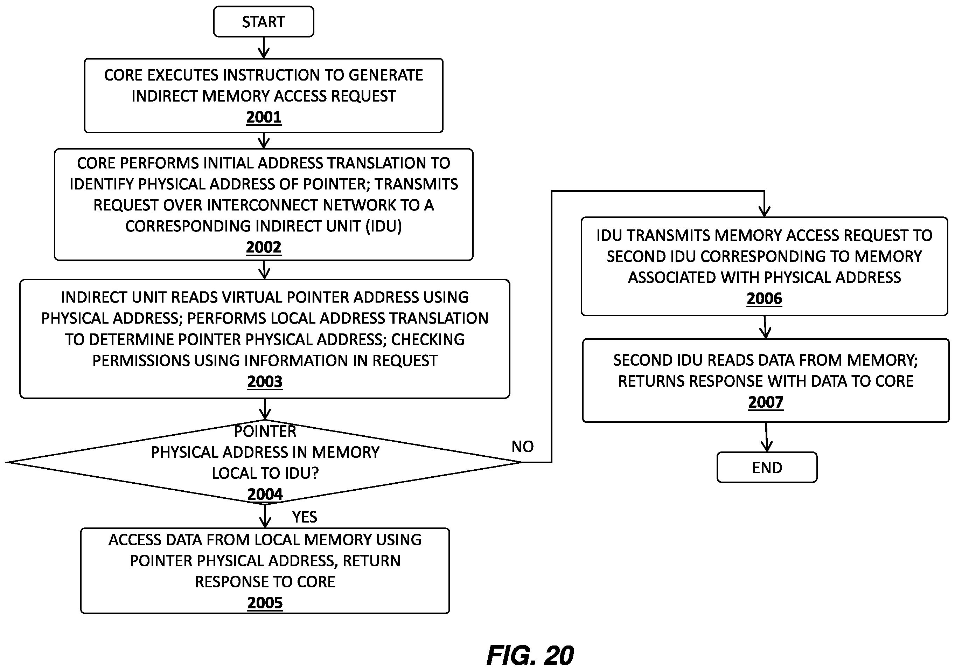

A method in accordance with some embodiments is illustrated in FIG. 20. The method may be implemented on the various architectures described herein, but is not limited to any particular processor or system architecture.

At 2001, a core executes an instruction to generate an indirect memory access request (e.g., an indirect load or store operation). At 2002, the core performs the initial address translation, performing a lookup in its local TLB and, if necessary, a page walk to determine a corresponding physical address of the pointer contained in the memory access request.

Using the physical address, the core identifies the location of the memory endpoint and the corresponding IDU. For example, a table structure may be maintained to map physical address ranges with various memories/IDUs in the system. Once the IDU is identified, the core transmits the request over the interconnect network to the IDU.

At 2003, the IDU reads the virtual pointer address from its local memory using the physical address included in the request and uses its local TLB and/or PTW circuitry to translate the virtual pointer address to a physical pointer address. If the physical pointer address is associated with the memory local to the IDU, determined at 2004, then at 2005, the IDU accesses the data from the local memory using the physical pointer address, and returns a response to the core which includes the data.

At 2004, if the IDU determines that the physical address is associated with a different memory endpoint, at 2006 it transmits the memory access request including the physical pointer address over the interconnect network to a second IDU corresponding to this memory endpoint. At 2007, the second IDU reads the data from its corresponding memory endpoint and returns the response with the data to the core over the interconnect network.

### EMBODIMENTS FOR A SCALABLE TLB SHOOTDOWN

Some embodiments of the invention reduce the cost of a TLB shootdown by converting it from a global operation (linear in the number of processors) to a local operation with a constant cost (independent of the number of processors).

Virtual memory systems rely on Translation Lookaside Buffers (TLBs), which are per-logical processor (LP) hardware units that speed up virtual to physical address translations by caching recent mappings. Whenever a mapping in a page table is removed or modified, it must be flushed from any TLBs which may contain copies, a process known as a "TLB shootdown."

TLB shootdowns are a widely recognized scalability limiter because they effectively serialize the parallel application's threads and their cost is high as they involve inter-processor interrupts. These costs grow in proportion to the application's parallelism. At one extreme, a TLB shootdown is a global operation that may span the entire parallel machine.

These embodiments of the invention reduce the global operation to a local operation, which dramatically reduces the cost of a TLB shootdown and maintain the TLB shootdown cost as opposed to allowing it to grow linearly with the size of the parallel machine.

In particular, some embodiments prevent TLBs from caching virtual to physical mappings for memory pages associated with memory controllers (MC) remote from the logical processor or core (e.g., coupled to the LP/core via the interconnect network). Virtual-to-physical translations for "local" pages are cached (e.g., using the TLB management techniques as described herein) and TLB accesses are performed in response to translation requests. TLB accesses for "remote" pages are sent to the logical processor/core directly coupled to the memory controller associated with the pages. In some implementations, a remote TLB access comprises a request message including the virtual address and the current address-space identifier (ASID) (e.g., the ASID associated with the instructions which generated the request). The remote memory endpoint then uses its TLB to perform the virtual-to-physical translation and complete the request. Because each TLB is only allowed to cache virtual-to-physical translations for "local" pages, only a single TLB will be flushed for a change in any give page, resulting in a predictable and constant latency.

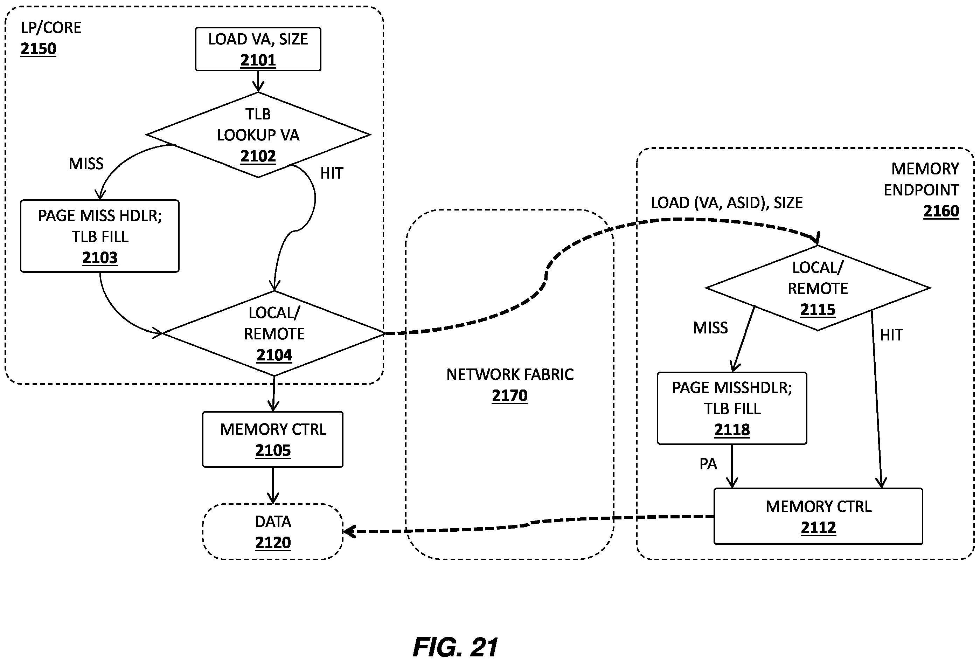

Embodiments of the invention thus employ techniques for both translating a virtual addresses generated by an application into a physical addresses and caching such translations into TLBs. FIG. 21 illustrates one particular implementation including a logical processor (LP) or core 2150 directly coupled to a local memory via a memory controller 2105 and coupled to a remote memory endpoint 2160 via an interconnect fabric 2170 (which may be the interconnect network 1910 described above).

At 2101, a load operation indicating a virtual address and optionally a size value is generated by the LP/core 2150 (e.g., by an executed load instruction). At 2102, a lookup is performed to the local TLB using the virtual address. If a TLB miss is detected, then at 2103, a page miss handler is run to perform a TLB fill operation (e.g., via access to the page walk circuitry). If a hit is detected, then at 2104, a determination is made as to whether the corresponding virtual address is a local or a remote reference. In one embodiment, local references are translated to physical addresses, either directly from the corresponding TLB entry or via a page walk of the local page tables via the memory controller 2105, following by caching the translation in the local TLB.

In these embodiments, remote references are immediately forwarded over the network fabric 2170 to the remote memory endpoint 2160, but instead of a physical address, the operation's target memory is described with a combination of a virtual address and an address space identifier. For example, on an x86 architecture, this includes a pair of (VA, CR3), where CR3 refers to the control register holding the current ASID value which is used to form the base address for the corresponding page table.

In these embodiments, the translations associated with remote accesses are also cached as "remote" in the local TLB. For example, rather than storing the virtual-to-physical address translation, the corresponding TLB entry stores an indication of the memory endpoint 2160 where the translation is stored. Thus, any further reference to the same page will immediately be forwarded to the remote memory endpoint 2160.

As indicated at 2115, if the load request received by the memory endpoint 2160 results in a TLB hit (e.g., the local TLB includes an entry corresponding to the VA and ASID values), then the corresponding physical address is read from the TLB and used to access the data 2120 via the memory controller 2112, which is returned to the LP/Core 215 via the network fabric 2170. If the load request results in a TLB miss, then at 2118, a page miss handler is initiated to perform a page walk operation and the resulting translation is filled into the TLB at the memory endpoint 2160. The translated physical address is then used to read the data 2120 via the memory controller 2112.

The basic idea of these embodiments is to discriminate between references to local memory, i.e., page frames housed in the referring to the processor's integrated memory controller 2105, and references to remote memory, i.e., page frames housed in other processors' integrated memory controllers (e.g., memory controller 2112). Upon receipt of such untranslated reference, any memory controllers 2112 in the system perform the translation and cache it in their local TLBs before responding with the data.

In this way, the underlying virtual-to-physical translations are only ever cached in the TLBs of processors whose integrated memory controllers store the corresponding page frames. Consequently, when such address translations need to be modified, only a small, fixed number of TLBs (those close to the memory controller storing the affected page frames) need to participate in a TLB shootdown, rather than all TLBs of all processors across the entire platform that may have executed a thread in that address space.

This converts the TLB shootdown procedure's cost from O(n), i.e., linear in the size of the system, to O(1), i.e., constant cost, effectively eliminating TLB shootdowns as a limiting factor for scaling parallel global address space applications on such a platform, e.g., ones built on top of or utilizing threading, OpenMP, OpenCL, etc. The revised address translation process performs the exact same number of fabric messages to perform any memory operation so it will not contribute to congested interconnects and will not add any additional message-related latency.

In some implementations, it may require an additional page walk for remote accesses, once at the originator's end and once at the storage end, but those will not be frequent as their results will be cached in the respective TLBs and then amortized over all subsequent accesses to the same page frame. In the vastly common case, where the TLBs on both ends already have mappings cached, the embodiments of the invention only add the minimal cost of an extra TLB hit lookup, typically one of the most highly optimized paths in modern processors.

### EXAMPLES

The following are example implementations of different embodiments of the invention.

Example 1. A processor, comprising: an interconnect network; a plurality of cores coupled to the interconnect network, a requesting core of the plurality of cores comprising a core translation lookaside buffer (TLB) and core page table walk (PTW) circuitry; a plurality of memory endpoint subsystems coupled to the interconnect network, each memory endpoint subsystem comprising a memory access circuit and a memory to be accessed via the interconnect network, each memory access circuit comprising a memory endpoint TLB and memory endpoint PTW circuitry; wherein one or more of the memory endpoint subsystems are to perform operations to process an indirect memory access request on behalf of the requesting core, the one or more of the memory endpoint subsystems to: read a virtual pointer address based on the indirect memory access request, translate the virtual pointer address to a physical pointer address, access data based on the physical pointer address, and transmit an indirect memory access response including the data to the requesting core.

Example 2. The processor of example 1 wherein the one or more of the memory endpoint subsystems comprise: a first memory endpoint subsystem including a first memory access circuit and a corresponding first memory, the first memory access subsystem to receive the indirect memory access request from the requesting core over the interconnect network and the first memory access circuit to read the virtual pointer address from the first memory at a physical address included in the indirect memory access request.

Example 3. The processor of examples 1 or 2 wherein the first memory access circuit includes a first memory endpoint TLB and first memory endpoint PTW circuitry, the first memory access circuit to access at least one of the first memory endpoint TLB and the first memory endpoint PTW circuitry to translate the virtual pointer address to the physical pointer address.

Example 4. The processor of any of examples 1-3 wherein the one or more of the memory endpoint subsystems further comprise: a second memory endpoint subsystem including a second memory access circuit and a corresponding second memory, wherein the first memory access circuit is to determine that the physical pointer address is associated with the second memory, the first memory access circuit to transmit a request including the physical pointer address to the second memory endpoint subsystem over the interconnect network.

Example 5. The processor of any of examples 1-4 wherein the second memory access circuit is to read the data from the second memory based on the physical pointer address, the second memory endpoint subsystem to transmit an indirect memory access response including the data over the interconnect network to the requesting core.

Example 6. The processor of any of examples 1-5 wherein the indirect memory access request is to be transmitted by the requesting core over the interconnect network to the first memory endpoint subsystem, the indirect memory access request to include a first one or more fields to indicate an address space identifier (ASID) value, a physical page number, and a permission level associated with a corresponding thread.

Example 7. The processor of any of examples 1-6 wherein the request transmitted by the first memory access circuit is to include a second one or more fields to indicate the ASID value, the physical pointer address, and the permission level.

Example 8. The processor of any of examples 1- wherein to translate the virtual pointer address to the physical pointer address, the first memory access circuit is to perform a lookup in the first memory endpoint TLB and, in response to a TLB miss, is to provide the virtual pointer address and an address space identifier (ASID) value included with the indirect memory access request to the PTW circuitry, the PTW circuit to perform a page walk operation using page tables stored in the first memory using the virtual pointer address and the ASID value.

Example 9. The processor of any of examples 1-8 wherein the requesting core is to execute one or more instructions to generate the indirect memory access request, the requesting core to access at least one of the core TLB and the core PTW circuitry to translate a corresponding virtual address to a corresponding physical address and to transmit the indirect memory access request with the corresponding physical address over the interconnect network, wherein a first memory endpoint subsystem of the one or more memory endpoint subsystems is to use the corresponding physical address to read the virtual pointer address.

Example 10. A method, comprising: executing one or more instructions on a requesting core of a plurality of cores to perform a first address translation to translate a corresponding virtual address to a corresponding physical address, the requesting core to transmit an indirect memory access request over an interconnect network to a first memory endpoint subsystem; reading a virtual pointer address by the first memory endpoint subsystem based on the corresponding physical address, translating the virtual pointer address to a physical pointer address at the first memory endpoint subsystem, accessing data based on the physical pointer address at a second memory endpoint subsystem, and transmitting an indirect memory access response including the data from the second memory endpoint subsystem to the requesting core.

Example 11. The method of example 10 wherein the first memory endpoint subsystem includes a first memory access circuit and a corresponding first memory, the first memory access circuit to read the virtual pointer address from the first memory at a physical address included in the indirect memory access request.

Example 12. The method of examples 10 or 11 wherein the first memory access circuit includes a first memory endpoint TLB and first memory endpoint PTW circuitry, the first memory access circuit to access at least one of the first memory endpoint TLB and the first memory endpoint PTW circuitry to translate the virtual pointer address to the physical pointer address.

Example 13. The method of any of examples 10-12 further comprising: determining at the first memory access circuit that the physical pointer address is associated with the second memory endpoint subsystem, and transmitting a request from the first memory endpoint subsystem to the second memory endpoint subsystem, the request including the physical pointer address.

Example 14. The method of any of examples 10-13 wherein the second memory endpoint subsystem includes a second memory access circuit and a second memory, the second memory access circuit to read the data from the second memory based on the physical pointer address.

Example 15. The method of any of examples 10-14 wherein the indirect memory access request is to be transmitted by the requesting core over the interconnect network to the first memory endpoint subsystem, the indirect memory access request to include a first one or more fields to indicate an address space identifier (ASID) value, a physical page number, and a permission level associated with a corresponding thread.

Example 16. The method of any of examples 10-15 wherein the request transmitted by the first memory endpoint subsystem is to include a second one or more fields to indicate the ASID value, the physical pointer address, and the permission level.

Example 17. The method of any of examples 10-16 wherein to translate the virtual pointer address to the physical pointer address, the first memory access circuit is to: perform a lookup in the first memory endpoint TLB and, in response to a TLB miss, to provide the virtual pointer address and an address space identifier (ASID) value included with the indirect memory access request to the PTW circuitry, the PTW circuit to perform a page walk operation using page tables stored in the first memory using the virtual pointer address and the ASID value.

Example 18. A machine-readable medium having program code stored thereon which, when executed by a machine, causes the machine to perform operations, comprising: executing one or more instructions on a requesting core of a plurality of cores to perform a first address translation to translate a corresponding virtual address to a corresponding physical address, the requesting core to transmit an indirect memory access request over an interconnect network to a first memory endpoint subsystem; reading a virtual pointer address by the first memory endpoint subsystem based on the corresponding physical address, translating the virtual pointer address to a physical pointer address at the first memory endpoint subsystem, accessing data based on the physical pointer address at a second memory endpoint subsystem, and transmitting an indirect memory access response including the data from the second memory endpoint subsystem to the requesting core.

Example 19. The machine-readable medium of example 18 wherein the first memory endpoint subsystem includes a first memory access circuit and a corresponding first memory, the first memory access circuit to read the virtual pointer address from the first memory at a physical address included in the indirect memory access request.

Example 20. The machine-readable medium of examples 18-19 wherein the first memory access circuit includes a first memory endpoint TLB and first memory endpoint PTW circuitry, the first memory access circuit to access at least one of the first memory endpoint TLB and the first memory endpoint PTW circuitry to translate the virtual pointer address to the physical pointer address.

Example 21. The machine-readable medium of any of examples 18-20 further comprising: determining at the first memory access circuit that the physical pointer address is associated with the second memory endpoint subsystem, and transmitting a request from the first memory endpoint subsystem to the second memory endpoint subsystem, the request including the physical pointer address.

Example 22. The machine-readable medium of any of examples 10-21 wherein the second memory endpoint subsystem includes a second memory access circuit and a second memory, the second memory access circuit to read the data from the second memory based on the physical pointer address.

Example 23. The machine-readable medium of any of examples 18-22 wherein the indirect memory access request is to be transmitted by the requesting core over the interconnect network to the first memory endpoint subsystem, the indirect memory access request to include a first one or more fields to indicate an address space identifier (ASID) value, a physical page number, and a permission level associated with a corresponding thread.

Example 24. The machine-readable medium of any of examples 18-23 wherein the request transmitted by the first memory endpoint subsystem is to include a second one or more fields to indicate the ASID value, the physical pointer address, and the permission level.

Example 25. The machine-readable medium of example 20 wherein to translate the virtual pointer address to the physical pointer address, the first memory access circuit is to: perform a lookup in the first memory endpoint TLB and, in response to a TLB miss, to provide the virtual pointer address and an address space identifier (ASID) value included with the indirect memory access request to the PTW circuitry, the PTW circuit to perform a page walk operation using page tables stored in the first memory using the virtual pointer address and the ASID value.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the FIG.s can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor, comprising:
an interconnect network;
a plurality of cores coupled to the interconnect network, a requesting core of the plurality of cores comprising a core translation lookaside buffer (TLB) and core page table walk (PTW) circuitry;
a plurality of memory endpoint subsystems coupled to the interconnect network, each memory endpoint subsystem comprising a memory access circuit and a memory to be accessed via the interconnect network, each memory access circuit comprising a memory endpoint TLB and memory endpoint PTW circuitry;
wherein one or more of the memory endpoint subsystems are to perform operations to process an indirect memory access request on behalf of the requesting core, the one or more of the memory endpoint subsystems to:
read a virtual pointer address based on the indirect memory access request,
translate the virtual pointer address to a physical pointer address, and
access data based on the physical pointer address, and
transmit an indirect memory access response including the data to the requesting core.

2. The processor of claim 1 wherein the one or more of the memory endpoint subsystems comprise:
a first memory endpoint subsystem including a first memory access circuit and a corresponding first memory, the first memory access subsystem to receive the indirect memory access request from the requesting core over the interconnect network and the first memory access circuit to read the virtual pointer address from the first memory at a physical address included in the indirect memory access request.

3. The processor of claim 2 wherein the first memory access circuit includes a first memory endpoint TLB and first memory endpoint PTW circuitry, the first memory access circuit to access at least one of the first memory endpoint TLB and the first memory endpoint PTW circuitry to translate the virtual pointer address to the physical pointer address.

4. The processor of claim 3 wherein the one or more of the memory endpoint subsystems further comprise:
a second memory endpoint subsystem including a second memory access circuit and a corresponding second memory, wherein the first memory access circuit is to determine that the physical pointer address is associated with the second memory, the first memory access circuit to transmit a request including the physical pointer address to the second memory endpoint subsystem over the interconnect network.

5. The processor of claim 4 wherein the second memory access circuit is to read the data from the second memory based on the physical pointer address, the second memory endpoint subsystem to transmit an indirect memory access response including the data over the interconnect network to the requesting core.

6. The processor of claim 4 or 5 wherein the indirect memory access request is to be transmitted by the requesting core over the interconnect network to the first memory endpoint subsystem, the indirect memory access request to include a first one or more fields to indicate an address space identifier (ASID) value, a physical page number, and a permission level associated with a corresponding thread.

7. The processor of claim 6 wherein the request transmitted by the first memory access circuit is to include a second one or more fields to indicate the ASID value, the physical pointer address, and the permission level.

8. The processor of any of claims 3 to 7 wherein to translate the virtual pointer address to the physical pointer address, the first memory access circuit is to perform a lookup in the first memory endpoint TLB and, in response to a TLB miss, is to provide the virtual pointer address and an address space identifier (ASID) value included with the indirect memory access request to the PTW circuitry, the PTW circuit to perform a page walk operation using page tables stored in the first memory using the virtual pointer address and the ASID value.

9. The processor of any of claims 1 to 8 wherein the requesting core is to execute one or more instructions to generate the indirect memory access request, the requesting core to access at least one of the core TLB and the core PTW circuitry to translate a corresponding virtual address to a corresponding physical address and to transmit the indirect memory access request with the corresponding physical address over the interconnect network, wherein a first memory endpoint subsystem of the one or more memory endpoint subsystems is to use the corresponding physical address to read the virtual pointer address.

10. A method, comprising:
executing one or more instructions on a requesting core of a plurality of cores to perform a first address translation to translate a corresponding virtual address to a corresponding physical address, the requesting core to transmit an indirect memory access request over an interconnect network to a first memory endpoint subsystem;
reading a virtual pointer address by the first memory endpoint
subsystem based on the corresponding physical address, translating the virtual pointer address to a physical pointer address at
the first memory endpoint subsystem,
accessing data based on the physical pointer address at a second memory endpoint subsystem, and
transmitting an indirect memory access response including the data from the second memory endpoint subsystem to the requesting core.

11. The method of claim 10 wherein the first memory endpoint subsystem includes a first memory access circuit and a corresponding first memory, the first memory access circuit to read the virtual pointer address from the first memory at a physical address included in the indirect memory access request.

12. The method of claim 11 wherein the first memory access circuit includes a first memory endpoint TLB and first memory endpoint PTW circuitry, the first memory access circuit to access at least one of the first memory endpoint TLB and the first memory endpoint PTW circuitry to translate the virtual pointer address to the physical pointer address.

13. The method of claim 12 further comprising:
determining at the first memory access circuit that the physical pointer address is associated with the second memory endpoint subsystem, and
transmitting a request from the first memory endpoint subsystem to the second memory endpoint subsystem, the request including the physical pointer address.

14. The method of claim 13 wherein the second memory endpoint subsystem includes a second memory access circuit and a second memory, the second memory access circuit to read the data from the second memory based on the physical pointer address.

15. The method of claim 13 or 14 wherein the indirect memory access request is to be transmitted by the requesting core over the interconnect network to the first memory endpoint subsystem, the indirect memory access request to include a first one or more fields to indicate an address space identifier (ASID) value, a physical page number, and a permission level associated with a corresponding thread.
